# EUROPEAN PATENT APPLICATION

(11) **EP 4 654 646 A1**
(43) Date of publication of application: **26.11.2025**
(21) Application number: 23922334.0
(22) Date of filing: 20.10.2023
(51) Int. Cl.: H04W 24/00, H04B 17/15

(54) **PERFORMANCE MONITORING METHOD FOR FUNCTIONAL MODULE, COMMUNICATION DEVICE, AND STORAGE MEDIUM**

(30) Priority: 17.02.2023 CN 202310175345
(71) Applicant: ZTE Corporation, Shenzhen, Guangdong 518057 (CN)
(72) Inventor: LIU, Wenfeng, Shenzhen, Guangdong 518057 (CN); LU, Zhaohua, Shenzhen, Guangdong 518057 (CN); ZHENG, Guozeng, Shenzhen, Guangdong 518057 (CN); WANG, Yuxin, Shenzhen, Guangdong 518057 (CN); XIAO, Huahua, Shenzhen, Guangdong 518057 (CN)
(74) Representative: Savi, Massimiliano
(86) International application number: PCT/CN2023/125660
(87) International publication number: WO 2024/169217

(57) **Abstract**

Embodiments of the present application provide a performance monitoring method for a functional module, a communication device, and a storage medium. The performance monitoring method for a functional module comprises: according to a received reference signal resource set and monitoring indication information, monitoring the performance of a functional module that is running, to generate monitoring result information of the functional module; and sending the monitoring result information to a first communication device.

## Description

### CROSS-REFERENCE TO RELATED APPLICATION

This application is filed on the basis of Chinese patent application No. 202310175345. X filed February 17, 2023, and claims priority to the Chinese patent application, the entire contents of which are incorporated herein by reference.

### TECHNICAL FIELD

Embodiments of the present disclosure relate to the technical field of communication, and more particularly, to a performance monitoring method for a functional module, a communication device, and a storage medium.

### BACKGROUND

Next generation cellular networks will utilize millimeter wave bands to greatly increase the network capacity. However, the millimeter wave bands have problems such as high propagation loss, unsatisfactory reflection and diffraction performance, and susceptibility to blockage of transmission channels. Therefore, a large-scale antenna array is generally used in a millimeter wave communication system to form shaped beams with high gains to compensate for the transmission loss and ensure system coverage. The 3rd Generation Partnership Project (3GPP) has formulated a complete set of beam management procedures for adjusting the beam direction of high frequency bands and maintaining an appropriate transmit-receive beam pair, including beam sweeping, beam measurement, beam reporting, beam indication, etc.

Currently, when a functional module is applied to the beam management of the air interface physical layer, the deployed functional module may no longer be valid due to the generalization of the functional module when the wireless communication channel environment changes, thus failing to accurately predict the optimal beam information, leading to a decline in communication system performance.

### SUMMARY

Embodiments of the present disclosure provide a performance monitoring method for a functional module, a communication device, and a storage medium, to sense and monitor the validity status and reliability of a functional module that is running.

In accordance with a first aspect of the present disclosure, an embodiment provides a performance monitoring method for a functional module, including: monitoring performance of a functional module that is running according to a received reference signal resource set and monitoring indication information, and generating monitoring result information of the functional module; and sending the monitoring result information to a first communication device.

In accordance with a second aspect of the present disclosure, an embodiment provides a performance monitoring method for a functional module, including: configuring a reference signal resource set and monitoring indication information, where the reference signal resource set and the monitoring indication information are used for instructing a second communication device to monitor performance of a functional module that is running; and receiving monitoring result information sent by the second communication device, where the monitoring result information is generated by the second communication device by monitoring performance of the functional module according to the received reference signal resource set and monitoring indication information.

In accordance with a third aspect of the present disclosure, an embodiment provides a communication device, including: at least one processor; and at least one memory, configured for storing at least one program, where the at least one program, when executed by the at least one processor, causes the at least one processor to implement the performance monitoring method for a functional module.

In accordance with a fourth aspect of the present disclosure, an embodiment provides a computer-readable storage medium, storing a processor-executable program, where the processor-executable program, when executed by a processor, causes the processor to implement the performance monitoring method for a functional module.

According to the performance monitoring method for a functional module, the communication device, and the storage medium provided by the embodiments of the present disclosure, performance of a functional module is monitored based on a received reference signal resource set and monitoring indication information, and monitoring result information of the functional module is generated, where the monitoring result information can characterize the validity status and reliability of the functional module; and the monitoring result information is sent to the first communication device, such that the first communication device can sense and monitor the running status of the functional module according to the monitoring result information, and further perform management operations such as activation, deactivation, selection, switching, rollback, and update of the functional module, thereby improving the application performance of the functional module.

### BRIEF DESCRIPTION OF DRAWINGS

FIG. 1 is a schematic diagram of an implementation environment configured for executing a performance monitoring method for a functional module according to an embodiment of the present disclosure;
FIG. 2 is a flowchart of a performance monitoring method for a functional module according to an embodiment of the present disclosure;
FIG. 3 is a flowchart of step S1000 in FIG. 2 according to an embodiment of the present disclosure;
FIG. 4 is a flowchart of a performance monitoring method for a functional module according to another embodiment of the present disclosure;
FIG. 5 is a schematic diagram of an application scenario of monitoring configuration information according to an embodiment of the present disclosure;
FIG. 6 is a schematic diagram of an application scenario of monitoring configuration information according to another embodiment of the present disclosure;
FIG. 7 is a flowchart of a performance monitoring method for a functional module according to another embodiment of the present disclosure;
FIG. 8 is a flowchart of a performance monitoring method for a functional module according to another embodiment of the present disclosure;
FIG. 9 is a flowchart of step S1000 in FIG. 2 according to another embodiment of the present disclosure;
FIG. 10 is a schematic diagram of an application scenario of monitoring configuration information according to another embodiment of the present disclosure;
FIG. 11 is a schematic diagram of an application scenario of monitoring configuration information according to another embodiment of the present disclosure;
FIG. 12 is a flowchart of a performance monitoring method for a functional module according to another embodiment of the present disclosure;
FIG. 13 is a flowchart of step S6000 in FIG. 12 according to an embodiment of the present disclosure;
FIG. 14 is a schematic diagram of reporting preferential transmission mode information of a future moment according to an embodiment of the present disclosure;
FIG. 15 is a schematic diagram of reporting preferential transmission mode information of a future moment according to another embodiment of the present disclosure;
FIG. 16(a) is a schematic diagram of reporting preferential transmission mode information of a future moment according to another embodiment of the present disclosure;
FIG. 16(b) is a schematic diagram of reporting preferential transmission mode information of a future moment according to another embodiment of the present disclosure;
FIG. 17 is a schematic diagram of reporting preferential transmission mode information of a future moment according to another embodiment of the present disclosure;
FIG. 18 is a schematic diagram of reporting preferential transmission mode information of a future moment according to another embodiment of the present disclosure; and
FIG. 19 is a schematic diagram of a communication device according to an embodiment of the present disclosure.

### DETAILED DESCRIPTION

To make the objects, technical schemes, and advantages of the present disclosure clearer, the present disclosure is described in further detail in conjunction with accompanying drawings and embodiments. It should be understood that the specific embodiments described herein are merely used for illustrating the present disclosure, and are not intended to limit the present disclosure.

It should be noted that although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first," "second" and the like in the description, the claims, and the accompanying drawings are used to distinguish similar objects, and are not necessarily used to describe a specific sequence or a precedence order.

In the embodiments of the present disclosure, any embodiment or design described following the terms such as "in an embodiment," "in some embodiments," and "for example" is used for indicating examples, explanations, or illustrations, and should not be construed as being superior or advantageous over other embodiments or designs. The use of the terms such as "in an embodiment," "in some embodiments," and "for example" is intended to present the relevant concepts in a concrete manner.

In the existing technology, next generation cellular networks will use millimeter wave bands to greatly increase the network capacity. However, the millimeter wave bands have problems such as high propagation loss, unsatisfactory reflection and diffraction performance, and susceptibility to blockage of transmission channels, bringing new challenges to the design of communication protocol stacks and greatly affecting the end-to-end performance and quality of service of the network for the user. Therefore, a large-scale antenna array is generally used in a millimeter wave communication system to form shaped beams with high gains to compensate for the transmission loss and ensure system coverage. In addition, both the user and the base stations need to adjust their beams and achieve precise alignment during initial access and data transmission to ensure maximum gain. The 3GPP has formulated a complete set of beam management procedures for adjusting the beam direction of high frequency bands and maintaining an appropriate transmit-receive beam pair, including beam sweeping, beam measurement, beam reporting, beam indication, etc.

In a typical beam management procedure, a base station configures a plurality of reference signal resources for beam measurement for a terminal device, including a Channel State Information Reference Signal (CSI-RS) and a Synchronization Signal and Physical Broadcast Channel (PBCH) Block (SSB). These reference signal resources are respectively carried on different downlink transmit beams. The terminal device measures these reference signals and reports a beam measurement result to the base station.

Reporting parameters of the beam measurement include a reference signal resource index SSBRI/CRI, a physical layer Reference Signal Received Power (L1-RSRP), or a physical layer Signal-to-Interference-plus-Noise Ratio (L1-SINR) corresponding to one or more transmit beams selected by the terminal device.

Because beams are generally selected from a predetermined analog beam codebook, exhaustive scanning of all beams in the codebook is an optimal beam training scheme in the existing technology. However, this scheme leads to high training overheads, measurement power consumption, and processing latency. To reduce the overheads of beam training and the power consumption of measurement, the base station may transmit reference signal resources in part of beam space or at part of moments, and use a relevant functional module (e.g., artificial intelligence (AI)) to predict full beam space information and an optimal beam of all the moments, thereby effectively reducing the overheads of beam training. However, limited by the generalization of the functional module deployed, the beam prediction performance may vary with time or channel environment, resulting in a loss of system performance. At present, there are still many problems to be solved for functional module monitoring, no specific functional module monitoring process has been proposed, and the rollback scheme after the functional module becomes invalid is still unclear.

In view of the above, the present disclosure provides a performance monitoring method for a functional module, a communication device, and a storage medium. The performance monitoring method for a functional module according to an embodiment includes: monitoring performance of a functional module that is running according to a received reference signal resource set and monitoring indication information, and generating monitoring result information of the functional module; and sending the monitoring result information to a first communication device. In this embodiment, performance of a functional module is monitored based on a received reference signal resource set and monitoring indication information, and monitoring result information of the functional module is generated, where the monitoring result information can characterize the validity status and reliability of the functional module; and the monitoring result information is sent to the first communication device, such that the first communication device can sense and monitor the running status of the functional module according to the monitoring result information, and further perform management operations such as activation, deactivation, selection, switching, rollback, and update of the functional module, thereby improving the application performance of the functional module.

The embodiments of the present disclosure will be further described in detail below with reference to the accompanying drawings.

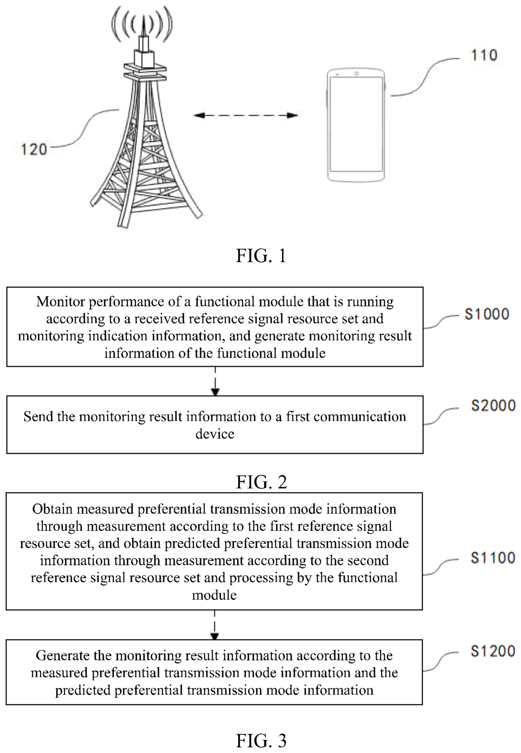

FIG. 1 is a schematic diagram of an implementation environment configured for executing a performance monitoring method for a functional module according to an embodiment of the present disclosure.

In the example of FIG. 1, the implementation environment includes a second communication device 110 and a first communication device 120. The first communication device 120 and the second communication device 110 can send wireless signals to and receive wireless signals from each other.

It should be noted that relative positions of the first communication device 120 and the second communication device 110 may be set according to specific application scenarios. For example, the second communication device 110 may move along a radiation sphere formed when the first communication device 120 radiates signals to the outside. In other words, if there are a plurality of second communication devices 110 and different second communication devices 110 are arranged in the above manner, the wireless signal sent by the first communication device 120 can be received at different spatial positions. It should be noted that the spatial positions may be different geographical locations.

In an embodiment, when the second communication device 110 is a terminal device (or referred to as a user equipment (UE)), the first communication device 120 may be, but not limited to, a base station. In embodiments of the present disclosure, the base station may be an evolved NodeB (eNB), a Transmission Reception Point (TRP), a Next Generation NodeB (gNB) in a New Radio (NR) system, a base station in other future mobile communication systems, or an access node in a Wireless Fidelity (Wi-Fi) system, etc. The specific technologies and the specific device forms adopted by the communication devices are not limited in the embodiments of the present disclosure. The UE may also be referred to as an access terminal device, a subscriber unit, a subscriber station, a mobile station, a mobile, a remote station, a remote terminal device, a mobile device, a user terminal device, a wireless communication device, a user agent, or a user device. For example, the UE may be a cellular phone, a cordless telephone, a Session Initiation Protocol (SIP) telephone, a Wireless Local Loop (WLL) station, a Personal Digital Assistant (PDA), a handheld device with a wireless communication function, a computing device or other processing device connected to a wireless modem, a vehicle-mounted device, a wearable device, a terminal device in a 5G network or future evolved networks, etc., which is not limited in embodiments of the present disclosure.

It should be noted that beams in the embodiments of the present disclosure are merely for convenience of description, and should not be construed as limiting of the present disclosure.

A transmit beam in the present disclosure is used for indicating a transmit mode, and parameters of the transmit mode include at least one of: a transmit beam; a transmit antenna; a transmit sector; transmit-end precoding; an antenna port; an antenna weight vector; an antenna weight matrix; a transmit mode corresponding to space division multiplexing; a transmit mode corresponding to frequency domain diversity transmission; a transmit mode corresponding to time domain diversity transmission; a transmit sequence; a number of layers for transmitting; a transmission mode; a modulation and coding scheme; a reference signal; or a transmit filter.

A receive beam in the present disclosure is used for indicating a receive mode, and parameters of the receive mode include at least one of: a receive beam; a receive antenna; a receive antenna panel; a receive sector; or a receive filter.

The second communication device 110 has at least functions of monitoring performance of a functional module that is running according to a received reference signal resource set and monitoring indication information, generating monitoring result information of the functional module, and sending the monitoring result information to the first communication device 120.

The first communication device 120 has at least a function of receiving monitoring result information sent by the second communication device 110, where the monitoring result information is generated by the second communication device 110 by monitoring performance of a functional module that is running according to a received reference signal resource set and monitoring indication information.

It should be noted that the above functions of the first communication device 120 and the second communication device 110 may be applied to different application scenarios, which is not limited herein.

It can be understood by those having ordinary skills in the art that the implementation environment may be applied to 5G and 6G communication network systems, future evolved mobile communication network systems, etc., which is not particularly limited in this embodiment.

Those having ordinary skills in the art may understand that the implementation environment shown in FIG. 1 does not constitute a limitation to the embodiments of the present disclosure, and more or fewer components than those shown in the figure may be included, or some components may be combined, or a different component arrangement may be used.

Based on the implementation environment shown in FIG. 1, embodiments of the performance monitoring method of a functional module of the present disclosure are proposed.

FIG. 2 is a flowchart of a performance monitoring method for a functional module according to an embodiment of the present disclosure. The performance monitoring method for a functional module may be applied to, for example, but not limited to, the second communication device 110 in the implementation environment shown in FIG. 1. The performance monitoring method for a functional module may include, but not limited to, the following steps S1000 and S2000.

At S1000, performance of a functional module that is running is monitored according to a received reference signal resource set and monitoring indication information, and monitoring result information of the functional module is generated.

At S2000, the monitoring result information is sent to a first communication device.

It should be noted that the second communication device in this embodiment may be, but not limited to, a UE, and the first communication device in this embodiment may be, but not limited to, a base station; or those having ordinary skills in the art may set the corresponding first communication device and second communication device according to actual application scenarios, which is not limited in this embodiment. To more conveniently describe the application scenarios and operating principles of the present disclosure, related embodiments are described below using an example where the second communication device is a UE and the first communication device is a base station, but such embodiments should not be construed as limiting of the embodiments of the present disclosure.

In this step, performance of a functional module is monitored based on a received reference signal resource set and monitoring indication information, and monitoring result information of the functional module is generated, where the monitoring result information can characterize the validity status and reliability of the functional module; and the monitoring result information is sent to the base station, such that the base station can sense and monitor the running status of the functional module according to the monitoring result information, and further perform management operations such as activation, deactivation, selection, switching, rollback, and update of the functional module, thereby improving the application performance of the functional module.

As shown in FIG. 3, in an embodiment of the present disclosure, S1000 is further described. When the reference signal resource set includes a first reference signal resource set and a second reference signal resource set, S1000 includes, but not limited to, the following steps S1100 to S1200.

At S1100, measured preferential transmission mode information is obtained through measurement according to the first reference signal resource set, and predicted preferential transmission mode information is obtained through measurement according to the second reference signal resource set and processing by the functional module.

At S1200, the monitoring result information is generated according to the measured preferential transmission mode information and the predicted preferential transmission mode information.

In this step, actual measured preferential transmission mode information is obtained through measurement using a full-beam sweeping method and compared with predicted preferential transmission mode information obtained through processing by the functional module, thereby generating the monitoring result information of the functional module to determine validity information or statistical information of the monitoring of the functional module.

In an embodiment, the monitoring result information includes, but not limited to:
single-time monitoring result information representing first performance monitoring result information generated based on a single measurement according to the reference signal resource set;
   or
statistical monitoring result information representing second performance monitoring result information generated based on a plurality of measurements according to the reference signal resource set, where the second performance monitoring result information is used for statistically monitored performance of the functional module;
   or
final monitoring result information representing third performance monitoring result information for the functional module.

In an embodiment, because the functional module can directly predict optimal beam information based on beam quality information of partial narrow beams or wide beams, or directly predict optimal beam information of one or more moments in the future based on beam quality information of a plurality of moments in the past, a scheme is proposed to determine the accuracy of beam prediction by obtaining actual optimal beam information by a conventional full-beam sweeping method and comparing the actual optimal beam information with predicted preferential transmission mode information obtained through processing by the functional module. If the functional module fails in reasoning for multiple consecutive times or a probability of reasoning failure exceeds a threshold, it may be determined that the functional module is no longer valid and a management step such as activation, deactivation, selection, switching, rollback, and update of the functional module needs to be performed. The base station configures a second reference signal resource set for input data collection by the functional module, and carries the second reference signal resource set on corresponding partial narrow beams or wide beams for transmission, and the UE performs beam measurement to obtain corresponding beam quality information; and the deployed functional module uses the corresponding measured beam quality information as an input of the functional module, to directly predict optimal beam information. In addition, the base station configures a first reference signal resource set for label collection by the functional module, and carries the first reference signal resource set on all corresponding narrow beams for transmission, and the UE performs beam measurement to obtain corresponding beam quality information, which corresponds to actual optimal beam information. A performance monitoring result (the monitoring result information of the functional module) can be obtained by comparing the predicted beam information with the actual beam information. For convenience of description, in the following related embodiments, the second reference signal resource set for input data collection by the functional module is defined as set B, and the first reference signal resource set for label collection by the functional module (i.e., for acquiring actual beam information) is defined as set A.

In an embodiment, set A and set B are associated with one resource configuration identifier or channel state information (CSI) reporting configuration identifier;
or
at least one resource configuration identifier corresponding to set A and at least one resource configuration identifier corresponding to set B are associated with one CSI reporting configuration identifier.

In other words, through the above association configuration, set A and set B are distinguished from other reference signal resources configured in the network, and two or more sets A and sets B associated with each other may be activated, deactivated, or triggered by the same Media Access Control-Control Element (MAC-CE) signaling or Downlink Control Information (DCI) signaling.

In an embodiment, the monitoring indication information includes, but not limited to:
monitoring configuration information for instructing to generate the monitoring result information;
   or
preset threshold information for generating the monitoring result information.

In other words, the monitoring configuration information is sent by the base station to the UE to instruct the UE to generate the monitoring result information according to the monitoring configuration information. The preset threshold information may be sent by the base station to the UE, such that after comparing the predicted optimal beam information with the actual beam information, the UE compares a beam prediction accuracy value or an L1-RSRP/L1-SINR prediction accuracy value corresponding to the deployed functional module with the preset threshold information sent by the base station, to determine whether the functional module is invalid. There may be a plurality of types of preset threshold information, each type of preset threshold information being used for correspondingly comparing with a corresponding prediction result of the functional module, which is not limited herein.

It should be noted that there may be a variety of specific implementations for the monitoring configuration information or the preset threshold information, and corresponding embodiments will be respectively described below.

Specific examples are given below to more clearly illustrate the operating principles of the above embodiments.

### Example One:

The base station indicates a preset threshold value for functional module monitoring to the UE, e.g., a beam prediction accuracy-related threshold, or an L1-RSRP/L1-SINR prediction accuracy-related threshold. After comparing the predicted optimal beam information with the actual beam information, the UE compares a beam prediction accuracy value or an L1-RSRP/L1-SINR prediction accuracy value corresponding to the deployed functional module with the preset threshold sent by the base station, to determine whether the functional module is invalid.

To implement beam prediction and acquire actual beam information, the base station configures a second reference signal resource set B and a first reference signal resource set A, and establishes an association relationship between set B and set A. Because measurement results of set B and set A respectively correspond to input data and output data of the deployed functional module, an association relationship between the two reference signal resource sets may be established in a resource configuration or a reporting configuration to distinguish the two reference signal resource sets from other reference signal resources configured in the network. Two or more reference signal resource sets associated with each other may be activated, deactivated, or triggered by the same MAC-CE signaling or DCI signaling. An association relationship between two or more reference signal resource sets may be established using one of the following at least two methods.

In one method, an association relationship between two or more reference signal resource sets is established in a resource configuration or reference signal resource set configuration. For example, an additional field is added to the resource configuration (e.g., CSI resource configuration field CSI-ResourceConfig) or resource set configuration (e.g., reference signal resource set configuration field NZP-CSI-RS-ResourceSet) to indicate a functional module identifier (ID), a reference signal resource set ID, a CSI resource configuration ID, or other newly defined IDs. An association relationship between two or more resource sets is established by associating the two or more resource sets with one ID.

In the other method, an association relationship between two or more reference signal resource sets is established in a reporting configuration. For example, if two or more reference signal resource set IDs or CSI resource configuration IDs for channel measurement are associated with one reporting configuration ID, it indicates that these resource sets correspond to one functional module, and measurement results of these resource sets respectively correspond to input data and output data of the functional module.

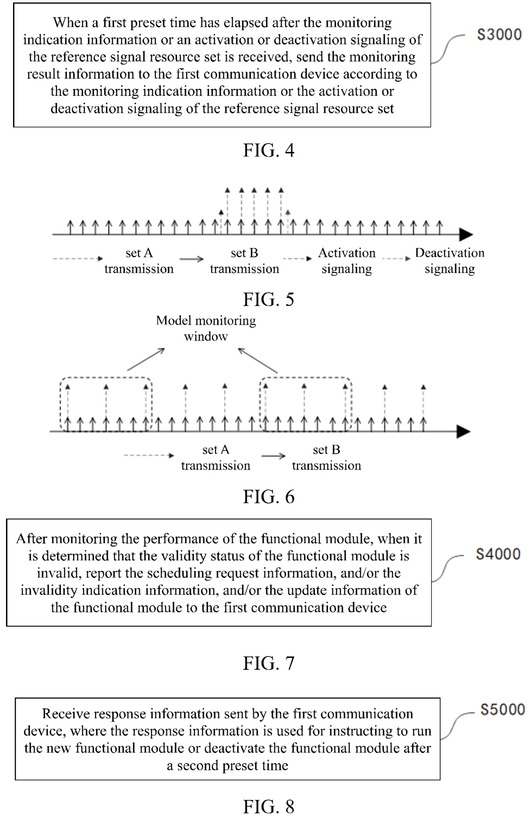

As shown in FIG. 4, in an embodiment of the present disclosure, the performance monitoring method for a functional module may further include, but not limited to, a following step S3000.

At S3000, when a first preset time has elapsed after the monitoring indication information or an activation or deactivation signaling of the reference signal resource set is received, the monitoring result information is sent to the first communication device according to the monitoring indication information or the activation or deactivation signaling of the reference signal resource set.

In this step, the UE reports the monitoring result information according to the monitoring indication information or the activation or deactivation signaling of the reference signal resource set, such that the base station further performs an operation on the functional module based on the monitoring result information. The purpose of setting the first preset time is to ensure that the monitoring result information can be generated accurately and reliably before being reported.

In an embodiment, the value of the first preset time may be set accordingly according to a specific application scenario or a capability of the UE, which is not limited herein.

In an embodiment, the monitoring configuration information includes, but not limited to, a first monitoring signaling or a second monitoring signaling, where the first monitoring signaling or the second monitoring signaling is used for instructing to activate or deactivate generation of the monitoring result information, and the first monitoring signaling or the second monitoring signaling is associated with activation or deactivation of the reference signal resource set;
or
the monitoring configuration information includes, but not limited to, a third monitoring signaling, where the third monitoring signaling is used for instructing to generate the monitoring result information in a performance monitoring window preconfigured by the first communication device, and configuration parameters of the performance monitoring window include a window period, a slot offset, and a window duration.

The performance monitoring window may be configured to be periodic, semi-persistent, or aperiodic. The method of generating the monitoring result information varies with different performance monitoring windows. Specific implementations will be described below.

Specific examples are given below to more clearly illustrate the operating principles of the above embodiments.

### Example Two:

The base station instructs the UE to monitor performance of the functional module, which may be implemented using one of the following at least two methods.

In one method, the base station configures an activation signaling and a deactivation signaling for functional module monitoring through Radio Resource Control (RRC) signaling, MAC-CE signaling, or DCI signaling, or associates activation/deactivation of functional module monitoring with activation/deactivation of set A. As shown in FIG. 5, upon receiving the activation signaling for functional module monitoring or the activation signaling of set A, the UE needs to compare predicted beam information with actual beam information after each subsequent measurement of set A and set B, and cache a result of the comparison to determine whether reasoning of the functional module is accurate. Upon receiving the deactivation signaling for functional module monitoring or the deactivation signaling of set A, the UE stops comparing the predicted beam information with the actual beam information.

In the other method, the base station configures a performance monitoring window through RRC signaling, MAC-CE signaling, or DCI signaling. The configuration of the performance monitoring window includes configuring three parameters, namely, period, slot offset, and window duration, of the performance monitoring window, which respectively describe a period of the performance monitoring window, a slot offset in the period, and a duration of each window. As shown in FIG. 6, the performance monitoring window may be configured to be periodic, semi-persistent, or aperiodic. In the performance monitoring window, the UE needs to compare the predicted beam information with the actual beam information after each measurement of set A and set B, and cache a result of the comparison to determine whether reasoning of the functional module is accurate. Outside the performance monitoring window, the UE does not need to measure set A or compare the predicted beam information with the actual beam information.

In an embodiment, when the monitoring result information includes, but not limited to, functional module feature information,
the functional module feature information includes first functional module feature information, and the first functional module feature information is used for indicating identification information of the functional module;
   or
the functional module feature information includes second functional module feature information, the second functional module feature information is used for indicating function information of the functional module, and the function information at least includes one of: space-domain beam prediction information; time-domain beam prediction information; space-time-domain beam prediction information; beam measurement feedback compression information; and beam parameter optimization information.

As shown in FIG. 7, in an embodiment of the present disclosure, the performance monitoring method for a functional module may further include, but not limited to, a following step S4000.

At S4000, after monitoring performance of the functional module, scheduling request information, and/or invalid-state indication information, and/or functional module update information is reported to the first communication device when it is determined that a validity status of the functional module is invalid.

The scheduling request information represents sending information indicating that the functional module is invalid to the first communication device, the invalid-state indication information is used for indicating that the validity status of the functional module is invalid and indicating feature information of the functional module, and the functional module update information is used for indicating whether a new functional module that replaces the functional module exists and indicating feature information of the new functional module.

In this step, if it is determined that the validity status of the functional module is invalid after monitoring the performance of the functional module, the UE reports scheduling request information, and/or invalid-state indication information, and/or functional module update information to the base station. The reported information is used to inform the base station that the current functional module is no longer valid and inform the base station of feature information of the functional module, and indicate, to the base station, whether a new functional module that replaces the functional module exists and indicate feature information of the new functional module, for the base station to perform a subsequent response operation.

As shown in FIG. 8, in an embodiment of the present disclosure, the performance monitoring method for a functional module may further include, but not limited to, a following step S5000.

At S5000, response information sent by the first communication device is received, where the response information is used for instructing to run the new functional module or deactivate the functional module after a second preset time.

In this step, based on the content reported by the UE, the base station sends response information to instruct the UE to apply the new functional module after a time interval, or instruct the UE to deactivate the current functional module and roll back to a conventional beam management mode.

In an embodiment, the value of the second preset time may be set according to a specific application scenario or a capability of the UE, which is not limited herein.

Specific examples are given below to more clearly illustrate the operating principles of the above embodiments.

The reporting of the monitoring result information of the functional module by the UE to the base station includes at least two reporting modes: a mode of reporting based on configuration and triggering by the base station and a mode of reporting actively triggered by the UE. Based on reporting by the UE, the base station sends a response on a Physical Downlink Control Channel (PDCCH) or a Physical Downlink Shared Channel (PDSCH) to instruct the UE to apply the new functional module after a time interval, or the base station sends a deactivation signaling to instruct the UE to deactivate the current functional module and roll back to a conventional beam management method. Specific procedures of the two reporting methods are respectively described below.

### Example Three:

Reporting based on configuration and triggering by the base station:
Signaling related to functional module monitoring is associated with reporting of the monitoring result information, including: associating a configuration signaling/activation signaling/deactivation signaling of functional module monitoring or the performance monitoring window or the first reference signal resource set A with the reporting of the monitoring result information, indicating that the UE should automatically report the monitoring result information after a preset time after receiving the relevant signaling, without requiring additional reporting trigger signaling. For example, the activation signaling/deactivation signaling of set A is associated with the reporting of the monitoring result information. This indicates that the UE should report the monitoring result information after a preconfigured time after receiving the activation signaling/deactivation signaling of set A. The length of the preconfigured time may be dynamically configured according to a capability of the UE. In addition, for the reporting of the monitoring result information, a new field may be added to the reporting configuration to feed back an identification of the functional module and a function of the functional module. The identification of the functional module is expressed as a functional module ID or a functional module function. Possible functions of the functional module include space-domain beam prediction, time-domain beam prediction, space-time-domain beam prediction, beam measurement feedback compression, beam parameter optimization, etc.

Under the above reporting conditions, the monitoring result information may be expressed as, for example, but not limited to: an intermediate result of single-time monitoring of the functional module, a statistical result of multiple times of monitoring of the functional module, and a final result of monitoring of the functional module.
1) The intermediate result of single-time monitoring of the functional module represents a result obtained by a single time of inference and beam information comparison. For example, the intermediate result is a first preset value, a second preset value, an L1-RSRP difference, or a difference between the L1-RSRP difference and a preset threshold.

The first preset value indicates accurate optimal beam index prediction. The accurate optimal beam index prediction means that top K candidate beam indexes obtained through prediction include an actual optimal beam index, or top K actual optimal beam indexes include a predicted optimal beam index, or an "actual L1-RSRP corresponding to the optimal beam index obtained through prediction" is within x dB of an "actual L1-RSRP corresponding to the actual optimal beam index", where the actual optimal beam index may be obtained by measuring set A, K≥1, and K and x are indicated to the UE by the base station or are predefined.

The second preset value indicates inaccurate optimal beam index prediction.

The L1-RSRP difference represents a difference between a "predicted L1-RSRP corresponding to the predicted optimal beam index" and the "actual L1-RSRP corresponding to the actual optimal beam index" or represents a difference between an "actual L1-RSRP corresponding to the predicted optimal beam index" and the "actual L1-RSRP corresponding to the actual optimal beam index", where the actual L1-RSRP is obtained by measuring set A or set B.

The intermediate result may also be a difference between the L1-RSRP difference and a preset threshold.

2) The statistical result of multiple times of monitoring of the functional module represents a statistical result obtained by multiple times of inference by the functional module and beam information comparison, and includes, but not limited to, at least one of: a number of times of accurate optimal beam index prediction, a proportion of accurate optimal beam index predictions, a number of times of inaccurate optimal beam index prediction, a proportion of inaccurate optimal beam index predictions, a statistically averaged L1-RSRP difference, a difference between the statistically averaged L1-RSRP difference and a preset threshold, etc.

3) The final result of monitoring of the functional module is, for example, a third preset value, a fourth preset value, or the like. The third preset value indicates that the functional module is valid. The fourth preset value indicates that the functional module is invalid.

The above preset values and related thresholds may be set according to a specific example or scenario, which is not limited herein.

### Example Four:

Reporting actively triggered by the UE includes the following three aspects.
1) Determining of a functional module failure event. The UE maintains a counter for functional module failure detection. The counter adds one to the number of failures when the optimal beam index prediction is inaccurate or the L1-RSRP difference is greater than the preset threshold sent by the base station. The counter adds one to the number of successes when the optimal beam index prediction is accurate or the L1-RSRP difference is less than the preset threshold sent by the base station. If the proportion of the number of reasoning failures or the number of consecutive inference failures is greater than a preset value, or the statistically averaged L1-RSRP difference is greater than a preset threshold, or when the accuracy of optimal beam index prediction is lower than a preset threshold within a preset time or a performance monitoring window, it is determined that a functional module failure event occurs.
2) Finding a new functional module. The UE searches for a new functional module from a candidate pool preconfigured by the base station and including a plurality of functional modules or functional module IDs. According to preset thresholds provided by the base station for finding a new functional module, if the proportion of the number of times of successful reasoning or the number of times of consecutive successful reasoning of a functional module is greater than a preset value, or the statistically averaged L1-RSRP difference is less than a preset threshold, or the accuracy of optimal beam index prediction is higher than a preset threshold within a preset time or a performance monitoring window, it is determined that a new functional module has been successfully found. Otherwise, it is determined that no new functional module has been found.
3) Reporting the monitoring result information. The UE sends a scheduling request on a Physical Uplink Control Channel (PUCCH), advertises the functional module failure event, requests a new functional module, and carries functional module failure reporting information on an uplink channel such as a PUCCH, a PUSCH, or a Physical Random Access Channel (PRACH). The functional module failure reporting information includes a functional module ID or functional module function that is no longer valid, whether a new functional module is found, a new functional module ID or a new functional module function, and a bandwidth part (BWP) index or component carrier (CC) index or cell index corresponding to the functional module failure event.

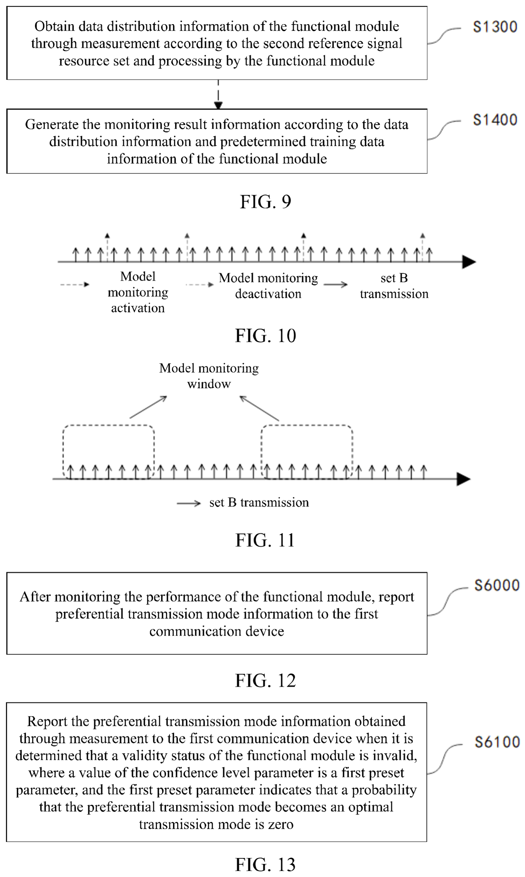

As shown in FIG. 9, in an embodiment of the present disclosure, S1000 is further described. When the reference signal resource set includes a second reference signal resource set, S1000 includes, but not limited to, the following steps S1300 to S1400.

At S1300, data distribution information of the functional module is obtained through measurement according to the second reference signal resource set and processing by the functional module.

At S1400, the monitoring result information is generated according to the data distribution information and predetermined training data information of the functional module.

In this step, a distribution status of input data or output data in a reasoning stage of the functional module, i.e., data distribution information, is calculated, and compared with a distribution status of input data or output data in a training stage of the functional module, i.e., training data information, to calculate a similarity between the data distribution information and the training data information. The monitoring result information can be accurately and reliably generated based on the similarity.

In an embodiment, because AI is mainly data-driven, a functional module trained with data mainly reflects features of training data, and generally has unsatisfactory performance for sample data with large deviations from the features of training data or with a distribution different from that of training data. Therefore, a performance monitoring method for a functional module based on data distribution is considered in this embodiment. First, a distribution status of input data or output data in a reasoning stage of the functional module is calculated, and compared with a distribution status of input data or output data in a training stage of the functional module to calculate a similarity between the two distribution statuses. When the two distribution statuses are similar, it can be directly determined that the functional module has satisfactory reasoning performance. When the two distribution statuses differ greatly, it can be directly determined that the functional module has unsatisfactory reasoning performance. When it is determined for multiple times within a period of time that the functional module has unsatisfactory reasoning performance, it may be determined that the functional module currently used is no longer valid and needs to be switched to a new functional module or rolled back to a conventional beam management method. The base station configures a second reference signal resource set for input data collection by the functional module, and carries the second reference signal resource set on corresponding partial narrow beams or wide beams for transmission, and the UE performs beam measurement to obtain corresponding beam quality information; and the deployed functional module uses the corresponding measured beam quality information as an input of the functional module, to directly predict optimal beam information. For convenience of description, in the following related embodiments, the second reference signal resource set for input data collection by the functional module is defined as set B.

It should be noted that related embodiments of the performance monitoring method and the related embodiments of the above performance monitoring method belong to the same inventive concept and are different from each other only in the reference signal resource sets. Therefore, for specific implementations of the related embodiments of the performance monitoring method, reference can be made to the specific implementations of the performance monitoring method in the above embodiments, and the details will not be repeated herein in order to avoid redundancy. Relevant examples of these specific implementations will be described in detail below.

### Example Five:

The base station indicates a preset threshold value for functional module monitoring to the UE, including, but not limited to, at least one of: features or a distribution status of input data or output data in the training phase of the deployed functional module, a data distribution parameter, a preset threshold for functional module monitoring, etc.

### Example Six:

The base station instructs the UE to monitor performance of the functional module.

The base station instructs the UE to monitor performance of the functional module, which may be implemented using one of the following at least two methods.

In one method, the base station configures an activation signaling and a deactivation signaling for functional module monitoring through RRC signaling, MAC-CE signaling, or DCI signaling. As shown in FIG. 10, when receiving the activation signaling for functional module monitoring, the UE needs to calculate a distribution status of input data or output data of the functional module after each subsequent measurement of set B, compare the distribution status with a distribution status of data in the training stage of the functional module, and cache a result of the comparison to determine whether reasoning of the functional module is accurate. When receiving the deactivation signaling for functional module monitoring, the UE stops calculating the data distribution status and determining whether reasoning of the functional module is accurate.

In the other method, the base station configures a performance monitoring window through RRC signaling, MAC-CE signaling, or DCI signaling. The configuration of the performance monitoring window includes configuring three parameters, namely, period, slot offset, and window duration, of the performance monitoring window, which respectively describe a period of the performance monitoring window, a slot offset in the period, and a duration of each window. As shown in FIG. 11, the performance monitoring window may be configured to be periodic, semi-persistent, or aperiodic. In the performance monitoring window, the UE needs to calculate a distribution status of input data or output data of the functional module after each measurement of set B, compare the distribution status with a distribution status of data in the training stage of the functional module, and cache a result of the comparison to determine whether reasoning of the functional module is accurate. Outside the performance monitoring window, the UE does not need to calculate the data distribution status and determine whether reasoning of the functional module is accurate.

In an embodiment, the reporting of the monitoring result information of the functional module by the UE to the base station includes at least two reporting modes: a mode of reporting based on configuration and triggering by the base station and a mode of reporting actively triggered by the UE. Based on reporting by the UE, the base station sends a response on a PDCCH or a PDSCH to instruct the UE to apply the new functional module after a time interval, or the base station sends a deactivation signaling to instruct the UE to deactivate the current functional module and roll back to a conventional beam management method. Specific procedures of the two reporting methods are respectively described below.

### Example Seven:

Reporting based on configuration and triggering by the base station:
Signaling related to functional module monitoring is associated with reporting of the monitoring result information, including: associating configuration signaling/activation signaling/deactivation signaling of functional module monitoring or the performance monitoring window with the reporting of the monitoring result information, indicating that the UE should automatically report the monitoring result information after a preset time after receiving the relevant signaling, without requiring additional reporting trigger signaling. For example, after a preconfigured time after the start or end of each performance monitoring window, the UE should report the monitoring result information. The length of the preconfigured time may be dynamically configured according to a capability of the UE. In addition, for the reporting of the monitoring result information, a new field may be added to the reporting configuration to feed back an identification of the functional module and a function of the functional module. The identification of the functional module is expressed as a functional module ID or a functional module function. Possible functions of the functional module include space-domain beam prediction, time-domain beam prediction, space-time-domain beam prediction, beam measurement feedback compression, beam parameter optimization, etc.

Under the above reporting conditions, the monitoring result information may be expressed as, for example, but not limited to: an intermediate result of single-time monitoring of the functional module, a statistical result of multiple times of monitoring of the functional module, and a final result of monitoring of the functional module.
1) The intermediate result of single-time monitoring of the functional module represents a result obtained by a single time of reasoning and data distribution calculation. For example, the intermediate result is a fifth preset value, a sixth preset value, a data distribution parameter, or a difference between the data distribution parameter and a preset threshold.

The fifth preset value represents that the single time of reasoning is accurate.

The sixth preset value represents that the single time of reasoning is inaccurate.

The data distribution parameter represents a distribution status of input data or output data of the functional module.

The intermediate result may also be a difference between the data distribution parameter and a preset threshold.

2) The statistical result of multiple times of monitoring of the functional module represents a statistical result obtained by multiple times of reasoning by the functional module and data distribution calculation, and for example, includes: a number of times of accurate reasoning of the functional module, a proportion of accurate reasoning of the functional module, a number of times of inaccurate reasoning of the functional module, a proportion of inaccurate reasoning of the functional module, a statistically averaged data distribution parameter, a difference between the statistically averaged data distribution parameter and a preset threshold, etc.

3) The final result of monitoring of the functional module is, for example, a seventh preset value, an eighth preset value, or the like. The seventh preset value indicates that the functional module is valid. The eighth preset value indicates that the functional module is invalid.

The above preset values and related thresholds may be set according to a specific example or scenario, which is not limited herein.

### Example Eight:

Reporting actively triggered by the UE includes the following three aspects.
1) Determining of a functional module failure event. The UE maintains a counter for functional module failure detection. The counter adds one to the number of failures when it is determined based on the distribution of the input data or output data of the functional module that the reasoning of the functional module is inaccurate. The counter adds one to the number of successes when it is determined based on the distribution of the input data or output data of the functional module that the reasoning of the functional module is accurate. If the proportion of the number of reasoning failures or the number of consecutive reasoning failures is greater than a preset value, or the statistically averaged data distribution parameter is greater than a preset threshold within a preset time or a performance monitoring window, it is determined that a functional module failure event occurs.
2) Finding a new functional module. The UE searches for a new functional module from a candidate pool preconfigured by the base station and including a plurality of functional modules or functional module IDs. According to preset thresholds provided by the base station for finding a new functional module, if the proportion of the number of times of successful reasoning or the number of times of consecutive successful reasoning of a functional module is greater than a preset value, or the statistically averaged data distribution parameter is less than a preset threshold within a preset time or a performance monitoring window, it is determined that a new functional module has been successfully found. Otherwise, it is determined that no new functional module has been found.
3) Reporting the monitoring result information. The UE sends a scheduling request on a PUCCH, advertises the functional module failure event, requests a new functional module, and carries functional module failure reporting information on an uplink channel such as a PUCCH, a PUSCH, or a PRACH. The functional module failure reporting information includes a functional module ID or functional module function that is no longer valid, whether a new functional module is found, a new functional module ID or a new functional module function, and a BWP index or CC index or cell index corresponding to the functional module failure event.

As shown in FIG. 12, in an embodiment of the present disclosure, the performance monitoring method for a functional module may further include, but not limited to, a following step S6000.

At S6000, after monitoring the performance of the functional module, preferential transmission mode information is reported to the first communication device.

In this step, as the channel environment changes, the deployed functional module may no longer be valid, and can no longer predict optimal beam information, so it is proposed to allocate a configured reporting resource associated with the functional module after the functional module becomes invalid, i.e., report the preferential transmission mode information to the first communication device after monitoring the performance of the functional module.

In an embodiment, the preferential transmission mode information at least includes one of:
a reference signal resource index corresponding to a preferential transmission mode;
a physical layer RSRP corresponding to a preferential transmission mode;
a physical layer SINR corresponding to a preferential transmission mode; or
a confidence level parameter for indicating a probability that the preferential transmission mode becomes an optimal transmission mode.

As shown in FIG. 13, in an embodiment of the present disclosure, S6000 is further described. When the preferential transmission mode information includes the confidence level parameter, S6000 includes, but not limited to, a following step S6100.

At S6100, the preferential transmission mode information obtained through measurement is reported to the first communication device when it is determined that a validity status of the functional module is invalid, where a value of the confidence level parameter is a first preset parameter, and the first preset parameter indicates that a probability that the preferential transmission mode becomes an optimal transmission mode is zero.

In this step, when the functional module becomes invalid, the UE cannot perform beam prediction, and therefore directly reports a measurement result of the configured reference signal resource set, and sets all confidence level parameters in the reporting parameters to a first preset parameter to inform the base station that the preferential transmission mode reported is not an optimal transmission mode.

In an embodiment, for space-domain beam prediction, the base station configures a reference signal resource set for input data collection by the functional module and carries the reference signal resource set on a corresponding narrow beam or wide beam for transmission, and the functional module on the UE side uses a beam measurement result as an input of the functional module to directly predict optimal beam information of the current moment. A parameter configuration for beam reporting is at least one of: a CRI/SSBRI, a confidence level parameter, and an L1-RSRP/L1-SINR corresponding to an optimal beam of a moment. The CRI/SSBRI represents an index of a reference signal resource selected by the UE in a resource set, i.e., a beam index. The confidence level parameter represents a probability that a corresponding beam becomes an optimal beam. The L1-RSRP/L1-SINR represents beam quality information obtained through measurement by the UE or through reasoning by the functional module. When the functional module becomes invalid, the UE cannot perform beam prediction, and therefore directly reports a measurement result of the configured reference signal resource set, and sets all confidence level parameters in the reporting parameters to zero.

In an embodiment, when preferential transmission mode information of one or more future moments is sent to the first communication device when it is determined that a validity status of the functional module is invalid,
the preferential transmission mode information obtained through measurement is reported to the first communication device at a first future moment, and a second preset parameter is reported to the first communication device at the remaining future moments, where the second preset parameter indicates that the preferential transmission mode information reported is empty;
   or
the preferential transmission mode information obtained through measurement is repeatedly reported to the first communication device at a plurality of the future moments;
   or
the preferential transmission mode information obtained through a plurality of measurements is respectively reported to the first communication device in chronological order or reverse chronological order at a plurality of the future moments;
   or
the preferential transmission mode information obtained through measurement is reported to the first communication device at a plurality of the future instants, where a total number of bits of the preferential transmission mode information reported is equal to a preset total number of bits to be reported.

It should be noted that the first preset parameter, the second preset parameter, the future moments, and the like in the above embodiments may be set according to a specific application scenario or a capability of the UE, which is not limited herein.

Specific examples are given below to illustrate the operating principles of the above embodiments.

### Example Nine:

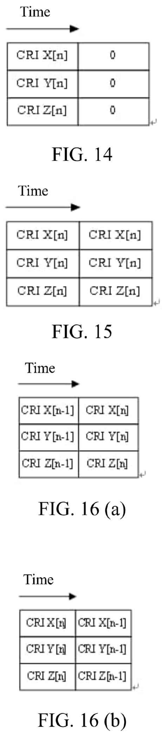

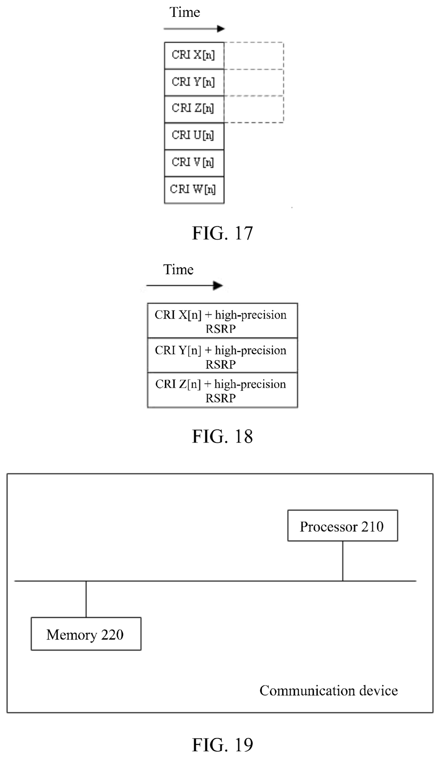

When the functional module becomes invalid, the UE cannot perform beam prediction. In this case, to ensure that the total number of bits to be reported remains unchanged, the UE may use, for example, but not limited to, the following reporting methods.
1) The UE reports beam information obtained in a latest measurement at the first future moment, and reports zero at other future moments. As shown in FIG. 14, it is assumed that optimal beam information of two future moments is reported, the number of beams reported at each moment is 3, the reporting parameter is CRI, n represents the moment, and X to Z represent reference signal resource indexes selected.
2) The UE repeatedly reports beam information obtained in a latest measurement at a plurality of future moments. As shown in FIG. 15, it is assumed that optimal beam information of two future moments is reported, the number of beams reported at each moment is 3, the reporting parameter is CRI, n represents the moment, and X to Z represent reference signal resource indexes selected.
3) The UE reports beam information measured at a plurality of moments in the past in chronological order or reverse chronological order, respectively at a plurality of future moments. As shown in FIG. 16(a) and FIG. 16(b), FIG. 16(a) shows reporting in chronological order, and FIG. 16(b) shows reporting in reverse chronological order. It is assumed that optimal beam information of two future moments is reported, the number of beams reported at each moment is 3, the reporting parameter is CRI, n and n-1 represent the moments, and X to Z represent reference signal resource indexes selected.
4) The UE only reports beam information obtained in a latest measurement, where the quantization precision of the beam measurement result remains unchanged, but more beams are reported, thereby ensuring that the total number of bits reported remains unchanged, i.e., the total number of bits of the preferential transmission mode information reported is equal to the preset total number of bits to be reported. As shown in FIG. 17, it is assumed that optimal beam information of two future moments is reported, the number of beams reported at each moment is 3, the reporting parameter is CRI, n represents the moment, and X to Z represent reference signal resource indexes selected.
5) The UE only reports beam information obtained in a latest measurement, where the number of beams reported at this moment remains unchanged, but the quantization precision of the beam measurement result is increased by increasing the number of quantization bits, thereby ensuring that the total number of bits reported remains unchanged, i.e., the total number of bits of the preferential transmission mode information reported is equal to the preset total number of bits to be reported. As shown in FIG. 18, it is assumed that optimal beam information of two future moments is reported, the number of beams reported at each moment is 3, the reporting parameters include CRI and L1-RSRP, n represents the moment, and X to Z represent reference signal resource indexes selected.

In addition, the performance monitoring method for a functional module may be applied to, for example, but not limited to, the first communication device 120 in the implementation environment shown in FIG. 1. The performance monitoring method for a functional module may include, but not limited to, the following steps S7000 and S8000.

At S7000, a reference signal resource set and monitoring indication information are configured, where the reference signal resource set and the monitoring indication information are used for instructing a second communication device to monitor performance of a functional module that is running.

At S8000, monitoring result information sent by the second communication device is received, where the monitoring result information is generated by the second communication device by monitoring performance of the functional module according to the received reference signal resource set and monitoring indication information.

It should be noted that the first communication device in this embodiment may be, but not limited to, a base station, and the second communication device in this embodiment may be, but not limited to, a UE; or those having ordinary skills in the art may set the corresponding first communication device and second communication device according to actual application scenarios, which is not limited in this embodiment. To more conveniently describe the application scenarios and operating principles of the present disclosure, related embodiments are described below using an example where the first communication device is a base station and the second communication device is a UE, but such embodiments should not be construed as limiting of the embodiments of the present disclosure.

In this step, the UE monitors performance of a functional module based on a received reference signal resource set and monitoring indication information, and monitoring result information of the functional module is generated, where the monitoring result information can characterize the validity status and reliability of the functional module; and the base station receives the monitoring result information sent by the UE, and therefore can sense and monitor the running status of the functional module according to the monitoring result information, and further perform management operations such as activation, deactivation, selection, switching, rollback, and update of the functional module, thereby improving the application performance of the functional module.

In an embodiment, when the reference signal resource set includes a first reference signal resource set and a second reference signal resource set, the UE obtains measured preferential transmission mode information through measurement according to the first reference signal resource set, obtains predicted preferential transmission mode information through measurement according to the second reference signal resource set and processing by the functional module, and generates the monitoring result information according to the measured preferential transmission mode information and the predicted preferential transmission mode information.

In an embodiment, the first reference signal resource set and the second reference signal resource set are associated with one resource configuration identifier or CSI reporting configuration identifier;
or
at least one resource configuration identifier corresponding to the first reference signal resource set and at least one resource configuration identifier corresponding to the second reference signal resource set are associated with one CSI reporting configuration identifier.

In an embodiment, when the reference signal resource set includes a second reference signal resource set, the UE obtains data distribution information of the functional module through measurement according to the second reference signal resource set and processing by the functional module, and generates the monitoring result information according to the data distribution information and predetermined training data information of the functional module.

In an embodiment, the monitoring indication information includes:
monitoring configuration information for instructing the second communication device to generate the monitoring result information;
   or
preset threshold information for generating the monitoring result information by the second communication device.

In an embodiment of the present disclosure, S8000 is further described. S8000 includes, but not limited to, a following step S8100.

At S8100, the monitoring result information sent by the second communication device according to the monitoring indication information or an activation or deactivation signaling of the reference signal resource set when a first preset time has elapsed after the monitoring indication information or the activation or deactivation signaling of the reference signal resource set is received is received.

In this step, the UE reports the monitoring result information according to the monitoring indication information or the activation or deactivation signaling of the reference signal resource set, such that the base station further performs an operation on the functional module based on the monitoring result information. The purpose of setting the first preset time is to ensure that the monitoring result information can be generated accurately and reliably before being reported by the UE.

In an embodiment, the monitoring configuration information includes a first monitoring signaling or a second monitoring signaling, where the first monitoring signaling or the second monitoring signaling is used for instructing the second communication device to activate or deactivate generation of the monitoring result information, and the first monitoring signaling or the second monitoring signaling is associated with activation or deactivation of the reference signal resource set;
or
the monitoring configuration information includes a third monitoring signaling, where the third monitoring signaling is used for instructing the second communication device to generate the monitoring result information in a performance monitoring window preconfigured by the first communication device, and configuration parameters of the performance monitoring window include a window period, a slot offset, and a window duration.

In an embodiment, the monitoring result information includes:
single-time monitoring result information representing first performance monitoring result information generated by the second communication device based on a single measurement according to the reference signal resource set;
   or
statistical monitoring result information representing second performance monitoring result information generated by the second communication device based on a plurality of measurements according to the reference signal resource set, where the second performance monitoring result information is used for statistically monitored performance of the functional module;
   or
final monitoring result information representing third performance monitoring result information obtained by the second communication device for the functional module.

In an embodiment, when the monitoring result information includes functional module feature information,
the functional module feature information includes first functional module feature information, and the first functional module feature information is used for indicating identification information of the functional module;
   or
the functional module feature information includes second functional module feature information, the second functional module feature information is used for indicating function information of the functional module, and the function information at least includes one of: space-domain beam prediction information; time-domain beam prediction information; space-time-domain beam prediction information; beam measurement feedback compression information; or beam parameter optimization information.

In an embodiment of the present disclosure, the performance monitoring method for a functional module may further include, but not limited to, a following step S9000.

At S9000, scheduling request information, and/or invalid-state indication information, and/or functional module update information reported by the second communication device when it is determined that a validity status of the functional module is invalid after monitoring the performance of the functional module is received.

The scheduling request information represents receiving information indicating that the functional module is invalid, the invalid-state indication information is used for indicating that the validity status of the functional module is invalid and indicating feature information of the functional module, and the functional module update information is used for indicating whether a new functional module that replaces the functional module exists and indicating feature information of the new functional module.

In this step, by receiving the information reported by the UE, the base station can determine that the current functional module is no longer valid and determine feature information of the functional module, and can determine whether a new functional module that replaces the functional module exists and indicate feature information of the new functional module, so as to perform a subsequent response operation.

In an embodiment of the present disclosure, the performance monitoring method for a functional module may further include, but not limited to, a following step S10000.

At S 10000, response information is sent to the second communication device.

The response information is used for instructing the second communication device to run the new functional module or deactivate the functional module after a second preset time.

In this step, the base station sends response information to instruct the UE to apply the new functional module after a time interval, or instruct the UE to deactivate the current functional module and roll back to a conventional beam management mode.

In an embodiment of the present disclosure, the performance monitoring method for a functional module may further include, but not limited to, a following step S11000.

At S11000, preferential transmission mode information reported by the second communication device after monitoring the performance of the functional module is received.

In this step, as the channel environment changes, the deployed functional module may no longer be valid, and the UE can no longer predict optimal beam information, so it is proposed to allocate a configured reporting resource associated with the functional module after the functional module becomes invalid, i.e., receive the preferential transmission mode information reported by the UE after monitoring the performance of the functional module.

In an embodiment, the preferential transmission mode information at least includes one of:
a reference signal resource index corresponding to a preferential transmission mode;
   or
a physical layer RSRP corresponding to a preferential transmission mode;
   or
a physical layer SINR corresponding to a preferential transmission mode;
   or
a confidence level parameter for indicating a probability that the preferential transmission mode becomes an optimal transmission mode.

In an embodiment, the preferential transmission mode information obtained through measurement reported by the second communication device when it is determined that a validity status of the functional module is invalid is received, where the preferential transmission mode information includes a confidence level parameter, a value of the confidence level parameter is a first preset parameter, and the first preset parameter indicates that a probability that the preferential transmission mode becomes an optimal transmission mode is zero.

In an embodiment, preferential transmission mode information of one or more future moments reported by the second communication device when it is determined that a validity status of the functional module is invalid is received, where:
the preferential transmission mode information obtained through measurement reported by the second communication device is received at a first future moment, and a second preset parameter reported by the second communication device is received at the remaining future moments, where the second preset parameter indicates that the preferential transmission mode information reported by the second communication device is empty;
   or
the preferential transmission mode information obtained through measurement repeatedly reported by the second communication device is received at a plurality of the future moments;
   or
the preferential transmission mode information obtained through a plurality of measurements respectively reported by the second communication device is received in chronological order or reverse chronological order at a plurality of the future moments;
   or
the preferential transmission mode information obtained through measurement reported by the second communication device is received at a plurality of the future moments, where a total number of bits of the preferential transmission mode information reported by the second communication device is equal to a preset total number of bits to be reported.

It should be noted that related embodiments of the performance monitoring method and the related embodiments of the above performance monitoring method belong to the same inventive concept and are different from each other only in that they are executed by different entities, i.e., the performance monitoring method is executed by the first communication device and the above performance monitoring method is executed by the second communication device; therefore, for specific implementations of the related embodiments of the performance monitoring method, reference can be made to the specific implementations of the performance monitoring method in the above embodiments, and the details will not be repeated herein in order to avoid redundancy.

In addition, as shown in FIG. 19, an embodiment of the present disclosure f discloses a communication device, including: at least one processor 210; and at least one memory 220, configured for storing at least one program. The at least one program, when executed by the at least one processor 210, causes the at least one processor 210 to implement the performance monitoring method for a functional module according to any of the above embodiments.

In addition, an embodiment of the present disclosure discloses a computer-readable storage medium, storing a computer-executable instruction which, when executed by a processor, causes the processor to implement the performance monitoring method for a functional module according to any of the above embodiments.

In addition, an embodiment of the present disclosure discloses a computer program product, including a computer program or computer instructions stored in a computer-readable storage medium, where the computer program or the computer instruction, when read from the computer-readable storage medium and executed by a processor of a computer device, causes the computer device to implement the performance monitoring method for a functional module according to any of the above embodiments.

The system architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new application scenarios, the technical schemes provided in the embodiments of the present disclosure are also applicable to similar technical problems.

Those having ordinary skills in the art can understand that all or some of the steps in the methods disclosed above and the functional modules/units in the system and the apparatus can be implemented as software, firmware, hardware, and appropriate combinations thereof.

In a hardware implementation, the division of the functional modules/units mentioned in the above description does not necessarily correspond to the division of physical components. For example, one physical component may have multiple functions, or one function or operation may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

As used in this description, the terms "component," "module," "system," and the like are used to denote computer-related entities, hardware, firmware, a combination of hardware and software, software, or software in execution. For example, a component may be, but not limited to, a process running on a processor, a processor, an object, an executable file, a thread of execution, a program, or a computer. An application running on a computing device and the computing device may both be illustrated as components. One or more components may reside in a process or thread of execution. A component may be located on one computer or distributed on two or more computers. In addition, the components may be executed from various computer-readable media having various data structures stored therein. The components may communicate via local and/or remote processes such as in accordance with a signal having one or more data packets (e.g., data from one component interacting with another component in a local system, distributed system, and/or across a network such as the Internet with other systems via the signal).

## Claims

1. A performance monitoring method for a functional module, comprising:
monitoring performance of a functional module that is running according to a received reference signal resource set and monitoring indication information, and generating monitoring result information of the functional module; and
sending the monitoring result information to a first communication device.

2. The method of claim 1, wherein in response to the reference signal resource set comprising a first reference signal resource set and a second reference signal resource set:
obtaining measured preferential transmission mode information through measurement according to the first reference signal resource set, and obtaining predicted preferential transmission mode information through measurement according to the second reference signal resource set and processing by the functional module; and
generating the monitoring result information according to the measured preferential transmission mode information and the predicted preferential transmission mode information.

3. The method of claim 2, wherein:
the first reference signal resource set and the second reference signal resource set are associated with one resource configuration identifier or channel state information (CSI) reporting configuration identifier;
or
at least one resource configuration identifier corresponding to the first reference signal resource set and at least one resource configuration identifier corresponding to the second reference signal resource set are associated with one CSI reporting configuration identifier.

4. The method of claim 1, wherein in response to the reference signal resource set comprising a second reference signal resource set:
obtaining data distribution information of the functional module through measurement according to the second reference signal resource set and processing by the functional module; and
generating the monitoring result information according to the data distribution information and predetermined training data information of the functional module.

5. The method of claim 1, wherein the monitoring indication information comprises:
monitoring configuration information for instructing to generate the monitoring result information;
or
preset threshold information for generating the monitoring result information.

6. The method of claim 1, wherein:
in response to a first preset time having elapsed after the monitoring indication information or an activation or deactivation signaling of the reference signal resource set is received, the monitoring result information is sent to the first communication device according to the monitoring indication information or the activation or deactivation signaling of the reference signal resource set.

7. The method of claim 5, wherein in response to the monitoring indication information comprising the monitoring configuration information,
the monitoring configuration information comprises a first monitoring signaling or a second monitoring signaling, wherein the first monitoring signaling or the second monitoring signaling is used for instructing to activate or deactivate generation of the monitoring result information, and the first monitoring signaling or the second monitoring signaling is associated with activation or deactivation of the reference signal resource set;
or
the monitoring configuration information comprises a third monitoring signaling, wherein the third monitoring signaling is used for instructing to generate the monitoring result information in a performance monitoring window preconfigured by the first communication device, and configuration parameters of the performance monitoring window comprise a window period, a slot offset, and a window duration.

8. The method of claim 1, wherein the monitoring result information comprises:
single-time monitoring result information representing first performance monitoring result information generated based on a single measurement according to the reference signal resource set;
or
statistical monitoring result information representing second performance monitoring result information generated based on a plurality of measurements according to the reference signal resource set, wherein the second performance monitoring result information is used for statistically monitored performance of the functional module;
or
final monitoring result information representing third performance monitoring result information for the functional module.

9. The method of claim 1, wherein:
the monitoring result information comprises functional module feature information, the functional module feature information comprises first functional module feature information, and the first functional module feature information is used for indicating identification information of the functional module.

10. The method of claim 1, wherein:
the monitoring result information comprises functional module feature information, the functional module feature information comprises second functional module feature information, the second functional module feature information is used for indicating function information of the functional module, and the function information at least comprises one of: space-domain beam prediction information; time-domain beam prediction information; space-time-domain beam prediction information; beam measurement feedback compression information; or beam parameter optimization information.

11. The method of claim 1, further comprising:
after monitoring performance of the functional module, reporting scheduling request information, and/or invalid-state indication information, and/or functional module update information to the first communication device in response to determining that a validity status of the functional module is invalid, wherein the scheduling request information represents sending information indicating that the functional module is invalid to the first communication device, the invalid-state indication information is used for indicating that the validity status of the functional module is invalid and indicating feature information of the functional module, and the functional module update information is used for indicating whether a new functional module that replaces the functional module exists and indicating feature information of the new functional module.

12. The method of claim 11, further comprising:
receiving response information sent by the first communication device, wherein the response information is used for instructing to run the new functional module or deactivate the functional module after a second preset time.

13. The method of claim 1, further comprising:
after monitoring the performance of the functional module, reporting preferential transmission mode information to the first communication device.

14. The method of claim 13, wherein the preferential transmission mode information at least comprises one of:
a reference signal resource index corresponding to a preferential transmission mode;
a physical layer reference signal received power (RSRP) corresponding to a preferential transmission mode;
a physical layer signal-to-interference-plus-noise ratio (SINR) corresponding to a preferential transmission mode; or
a confidence level parameter for indicating a probability that the preferential transmission mode becomes an optimal transmission mode.

15. The method of claim 13, wherein in response to the preferential transmission mode information comprising a confidence level parameter,
the preferential transmission mode information obtained through measurement is reported to the first communication device in response to determining that a validity status of the functional module is invalid, wherein a value of the confidence level parameter is a first preset parameter, and the first preset parameter indicates that a probability that the preferential transmission mode becomes an optimal transmission mode is zero.

16. The method of claim 13, wherein in response to preferential transmission mode information of one or more future moments being sent to the first communication device in response to determining that a validity status of the functional module is invalid,
the preferential transmission mode information obtained through measurement is reported to the first communication device at a first future moment, and a second preset parameter is reported to the first communication device at the remaining future moments, wherein the second preset parameter indicates that the preferential transmission mode information reported is empty;
or
the preferential transmission mode information obtained through measurement is repeatedly reported to the first communication device at a plurality of the future moments;
or
the preferential transmission mode information obtained through a plurality of measurements is respectively reported to the first communication device in chronological order or reverse chronological order at a plurality of the future moments;
or
the preferential transmission mode information obtained through measurement is reported to the first communication device at a plurality of the future moments, wherein a total number of bits of the preferential transmission mode information reported is equal to a preset total number of bits to be reported.

17. A performance monitoring method for a functional module, comprising:
configuring a reference signal resource set and monitoring indication information, wherein the reference signal resource set and the monitoring indication information are used for instructing a second communication device to monitor performance of a functional module that is running; and
receiving monitoring result information sent by the second communication device, wherein the monitoring result information is generated by the second communication device by monitoring performance of the functional module according to the reference signal resource set and the monitoring indication information that are received.

18. The method of claim 17, wherein:
the monitoring result information sent by the second communication device according to the monitoring indication information or an activation or deactivation signaling of the reference signal resource set in response to a first preset time having elapsed after the monitoring indication information or the activation or deactivation signaling of the reference signal resource set is received is received.

19. The method of claim 17, further comprising:
receiving scheduling request information, and/or invalid-state indication information, and/or functional module update information reported by the second communication device in response to determining that a validity status of the functional module is invalid after monitoring the performance of the functional module, wherein the scheduling request information represents receiving information indicating that the functional module is invalid, the invalid-state indication information is used for indicating that the validity status of the functional module is invalid and indicating feature information of the functional module, and the functional module update information is used for indicating whether a new functional module that replaces the functional module exists and indicating feature information of the new functional module.

20. The method of claim 19, further comprising:
sending response information to the second communication device, wherein the response information is used for instructing the second communication device to run the new functional module or deactivate the functional module after a second preset time.

21. The method of claim 17, further comprising:
receiving preferential transmission mode information reported by the second communication device after monitoring the performance of the functional module.

22. The method of claim 21, wherein:
the preferential transmission mode information obtained through measurement reported by the second communication device in response to determining that a validity status of the functional module is invalid is received, wherein the preferential transmission mode information comprises a confidence level parameter, a value of the confidence level parameter is a first preset parameter, and the first preset parameter indicates that a probability that the preferential transmission mode becomes an optimal transmission mode is zero.

23. The method of claim 21, wherein:
preferential transmission mode information of one or more future moments reported by the second communication device in response to determining that a validity status of the functional module is invalid is received, wherein:
the preferential transmission mode information obtained through measurement reported by the second communication device is received at a first future moment, and a second preset parameter reported by the second co₁mnunication device is received at the remaining future moments, wherein the second preset parameter indicates that the preferential transmission mode information reported by the second communication device is empty;
or
the preferential transmission mode information obtained through measurement repeatedly reported by the second communication device is received at a plurality of the future moments;
or
the preferential transmission mode information obtained through a plurality of measurements respectively reported by the second communication device is received in chronological order or reverse chronological order at a plurality of the future moments;
or
the preferential transmission mode information obtained through measurement reported by the second communication device is received at a plurality of the future moments, wherein a total number of bits of the preferential transmission mode information reported by the second communication device is equal to a preset total number of bits to be reported.

24. A communication device, comprising:
at least one processor; and
at least one memory, configured for storing at least one program,
wherein the at least one program, when executed by the at least one processor, causes the at least processor to perform the performance monitoring method for a functional module of any of claims 1 to 23.

25. A computer-readable storage medium, storing a processor-executable program, wherein the processor-executable program, when executed by a processor, causes the processor to perform the performance monitoring method for a functional module of any of claims 1 to 23.
